Europäisches Patentamt

European Patent Office

Office européen des brevets

(19)

(11) Veröffentlichungsnummer: **0 047 732**
**B1**

(12) **EUROPÄISCHE PATENTSCHRIFT**

(45) Veröffentlichungstag der Patentschrift:
24.10.84

(51) Int. Cl.³: **F 24 J 3/02**

(21) Anmeldenummer: 81890143.1

(22) Anmeldetag: **24.08.81**

(54) **Aus Kunststoff gefertigter Sonnenkollektor.**

(30) Priorität: **05.09.80 AT 4476/80**

(43) Veröffentlichungstag der Anmeldung:
**17.03.82 Patentblatt 82/11**

(45) Bekanntmachung des Hinweises auf die Patenterteilung:
**24.10.84 Patentblatt 84/43**

(84) Benannte Vertragsstaaten:
**BE CH DE FR GB IT LI LU NL SE**

(56) Entgegenhaltungen:
**DE - A - 2 535 581**
**DE - U - 8 004 826**
**FR - A - 2 308 064**

(73) Patentinhaber: **Netousek, Karl, Kreindlgasse 29,
A-1190 Wien (AT)**

(72) Erfinder: **Netousek, Karl, Kreindlgasse 29, A-1190 Wien
(AT)**

(74) Vertreter: **Itze, Peter, Dipl.-Ing. et al, Patentanwälte
Dipl.-Ing. Leopold Friebel Dipl.-Ing. Peter Itze
Zieglergasse 57/11, A-1070 Wien (AT)**

## Beschreibung

Die Erfindung bezieht sich auf einen aus Kunststoff gefertigten Sonnenkollektor, bei welchem zwischen einem Zuleitungsrohr und einem parallel zu demselben verlaufenden Ableitungsrohr für die Wärmespeicherflüssigkeit eine mit quer zur Achsrichtung dieser Rohre verlaufenden und in den Innenraum der letzteren mündenden Kanälen versehene Platte an je einem, jeweils einen Längsschlitz oder eine in Achsrichtung verlaufende Lochreihe aufweisenden Bereich des Zuleitungsrohres bzw. des Ableitungsrohres durch Verschweissen oder Verkleben befestigt und beispielsweise mit ihren die Mündungen der Kanäle aufweisenden Kanten in die Längsschlitze der Rohre eingesteckt ist.

Bei derartigen Sonnenkollektoren wird die Platte mit ihren die Mündungen der Kanäle aufweisenden Kanten mit dem Zuleitungs- und dem Ableitungsrohr stumpf verklebt oder verschweisst (DE-U1-8004826). In der Praxis hat sich dabei gezeigt, dass die Verbindung zwischen der Platte und den Rohren im Bereich der Enden des Längsschlitzes bzw. der Lochreihe zu Undichtheiten neigt. Ausserdem sind derartige Kollektoren nur sehr schwierig mit automatischen Maschinen verschweissbar bzw. verklebbar, da ein exaktes Herumführen des Schweisskopfes bzw. der Kleberausgabedüse um die Endkanten der Platten nicht möglich ist. Es müssen daher in der Regel die Endbereiche von Hand verschweisst bzw. verklebt werden, was einen erheblichen Zeit- bzw. Arbeitsaufwand bedeutet. Schliesslich ist die Festigkeit der Verbindung zwischen der Platte und den Rohren, insbesondere bei freistehenden Sonnenkollektoren, ein wesentlicher Faktor, da von dieser Verbindung doch oft erhebliche Winddrücke bzw. gegebenenfalls Schneelasten aufzunehmen sind.

Gemäss einer weiteren bekannten Ausbildung (DE-A1-2535581) weist das mit der Platte zu verbindende Rohr gleichfalls einen Schlitz auf, der hinsichtlich Grösse und Form derart gestaltet ist, dass die Platte eingesteckt und mit dem Rohr durch Kehlschweissung bzw. durch Aufbringung eines Kittklebers oder eines Klebebandes verbunden werden kann. Es treten bei dieser Ausbildung die gleichen Nachteile wie bei der oben beschriebenen bekannten Ausbildung auf.

Schliesslich ist noch eine weitere Ausbildung bekannt (FR-A1-2308064), bei welcher die Platte im Schlitze eines Rohres eingesteckt und mit letzterem dicht verbunden wird, wobei auch durch diese Ausbildung die zur erstgenannten bekannten Ausführung angegebenen Nachteile nicht vermieden sind.

Erfindungsgemäss werden die genannten Nachteile dadurch vermieden, dass die Platte, in Achsrichtung der Rohre gemessen, länger als der Längsschlitz bzw. die Lochreihe ist und mit ihren über den Längsschlitz bzw. die Lochreihe beidseits hinausstehenden Bereichen mit der Aussenwandung des Zuleitungsrohres bzw. des Ableitungsrohres unter Verschliessen der in diesen Bereichen ausmündenden Kanäle stumpf verklebt oder verschweisst ist. Dadurch wird an den Enden der Längsschlitze bzw. der Lochreihe eine direkte Verbindung zwischen der Platte und den Rohren geschaffen, so dass ein dichtes Verkleben oder Verschweissen nur mehr in Längsrichtung der Rohre erforderlich ist, was mittels Automaten ohne Schwierigkeiten durchführbar ist. Weiters kann die stumpfe Verklebung bzw. Verschweissung in den über die Längsschlitze bzw. Lochreihen hinausstehenden Bereichen höhere Kräfte aufnehmen als eine Verklebung bzw. Verschweissung entlang der Kanten, da eine erheblich grössere Fläche für die Verbindung zur Verfügung steht. Es wird damit eine höhere Stabilität der gesamten Verbindung zwischen der Platte und den Rohren erzielt. Das Verschliessen der in den stumpf verklebten oder verschweissten Bereichen ausmündenden Kanäle hat dabei den Vorteil, dass es zu keinen Undichtheiten entlang der freien, für Beschädigungen leicht anfälligen Kanten der Platte kommen kann, da durch diese Kanäle keine Wärmespeicherflüssigkeit strömt.

Vorteilhafterweise kann die Platte in den Endbereichen ihrer die Mündungen der Kanäle aufweisenden Kanten unter Bildung von zu diesen Kanten parallelen weiteren Kanten ausgeschnitten sein, wobei die so gebildeten weiteren Kanten der Platte mit der Aussenwandung des Zuleitungsrohres bzw. des Ableitungsrohres unter Verschliessen der in den Bereichen der weiteren Kanten ausmündenden Kanäle stumpf verklebt oder verschweisst sind. Dadurch wird ein besonders stabiler Sonnenkollektor erzielt, bei welchem die Verklebung bzw. Verschweissung entlang der Längskanten des Längsschlitzes besonders wenig Kräfte, die durch Winddrücke od. dgl. auftreten, aufnehmen muss.

In der Zeichnung sind zwei Ausführungsbeispiele des Erfindungsgegenstandes dargestellt.

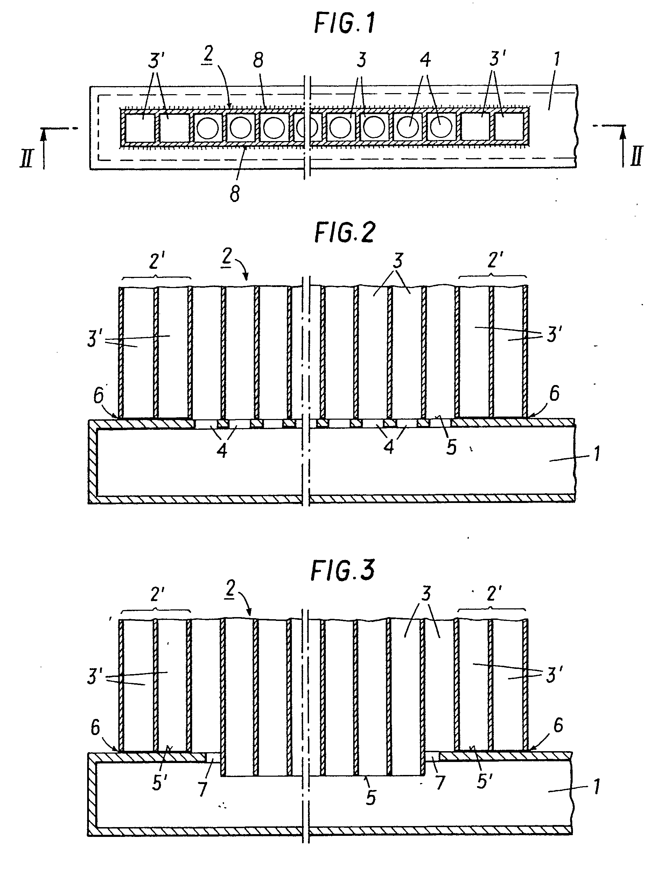

Fig. 1 zeigt einen Horizontalschnitt durch die Platte der ersten Ausführungsvariante des erfindungsgemässen Sonnenkollektors;

Fig. 2 ist ein Vertikalschnitt nach Linie II–II der Fig. 1;

Fig. 3 gibt einen Vertikalschnitt durch die zweite Ausführungsform des erfindungsgemässen Sonnenkollektors wieder.

Mit 1 ist eines der beiden Rohre, und zwar das Zuleitungsrohr, bezeichnet. Die Verbindung zwischen dem Ableitungsrohr und der Platte 2 ist jener zwischen dem Zuleitungsrohr und der Platte gleich ausgebildet, so dass nur die Verbindung der Platte mit einem der beiden Rohre, nämlich dem Zuleitungsrohr, dargestellt ist. Die Platte 2 weist in ihrem Inneren Kanäle 3 auf, mittels welchen das Zuleitungsrohr mit dem Ableitungsrohr verbunden ist. Die Platte 2 ist mit dem Rohr 1 bei 8 verschweisst.

Gemäss dem ersten Ausführungsbeispiel ist das Rohr 1 mit einer parallel zu seiner Längsachse verlaufenden Lochreihe 4 versehen, entlang welcher die Platte 2 mit ihrer die Mündungen der Kanäle 3 aufweisenden Kante 5 auf das Rohr 1 stumpf aufgesetzt ist. Die Platte 2 ist in Achsrichtung des Rohres 1 gemessen länger als die Lochreihe 4 und reicht somit zu beiden Seiten über die Lochreihe 4 hinaus. In diesen über die Lochreihe 4 hinausstehenden Bereichen 2' ist die Platte 2 mit der Aussenwandung des Rohres 1 bei 6 stumpf verklebt oder verschweisst. Die in den Bereichen 2' ausmündenden Kanäle 3' sind dabei durch die Verklebung bzw. Verschweissung dicht verschlossen.

Bei dem zweiten Ausführungsbeispiel weist das Rohr 1 einen Längsschlitz 7 auf, in welchen die Platte 2 eingesteckt ist. Die Platte ist dabei gleichfalls, in Achsrichtung des Rohres 1 gemessen, länger als der Längsschlitz 7 des Rohres 1 und steht somit beidseits über den Längsschlitz 7 hinaus. Da die Mündungen der Kanäle 3 aufweisende Kante 5 ist in ihren Endbereichen unter Bildung von zu dieser Kante 5 parallelen, weiteren Kanten 5' ausgeschnitten, wobei die Länge der in den Längsschlitz 7 eingesteckten Kante 5 etwa gleich der Länge des Längsschlitzes 7 ist. Die Platte 2 ist im Bereich der weiteren Kanten 5' mit der Aussenwandung des Rohres 1 bei 6 stumpf verklebt oder verschweisst, wobei die im Bereich der weiteren Kanten 5' ausmündenden Kanäle 3' durch die Verklebung oder die Verschweissung dicht verschlossen sind.

Bei beiden Ausführungsformen wird bei der Herstellung des Sonnenkollektors zuerst die Verklebung bzw. die Verschweissung 6 durchgeführt, wodurch eine erste Verbindung zwischen der Platte und den Rohren geschaffen wird, so dass sich dann spezielle Haltemittel während des Verklebens bzw. Verschweissens der Längskanten 5 erübrigen. Es wird somit auch die Handhabung während der Herstellung des Sonnenkollektors wesentlich vereinfacht.

## Patentansprüche

1. Aus Kunststoff gefertigter Sonnenkollektor, bei welchem zwischen einem Zuleitungsrohr (1) und einem parallel zu demselben verlaufenden Ableitungsrohr für die Wärmespeicherflüssigkeit eine mit quer zur Achsrichtung dieser Rohre (1) verlaufenden und in den Innenraum der letzteren mündenden Kanälen (3) versehene Platte (2) an je einem, jeweils einen Längsschlitz (7) oder eine in Achsrichtung verlaufende Lochreihe (4) aufweisenden Bereich des Zuleitungsrohres bzw. des Ableitungsrohres durch Verschweissen oder Verkleben befestigt und beispielsweise mit ihren die Mündungen der Kanäle (3) aufweisenden Kanten (5) in die Längsschlitze (7) der Rohre (1) eingesteckt ist, dadurch gekennzeichnet, dass die Platte (2), in Achsrichtung der Rohre (1) gemessen, länger als der Längsschlitz (7) bzw. die Lochreihe (4) ist und mit ihren über den Längsschlitz (7) bzw. die Lochreihe (4) beidseits hinausstehenden Bereichen (2') mit der Aussenwandung des Zuleitungsrohres bzw. des Ableitungsrohres (1) unter Verschliessen der in diesen Bereichen (2') ausmündenden Kanäle (3') stumpf verklebt oder verschweisst ist.

2. Sonnenkollektor nach Anspruch 1, dadurch gekennzeichnet, dass die Platte (2) in den Endbereichen ihrer die Mündungen der Kanäle (3) aufweisenden Kanten (5) unter Bildung von zu diesen Kanten (5) parallelen weiteren Kanten (5') ausgeschnitten ist, wobei die so gebildeten weiteren Kanten (5') der Platte (2) mit der Aussenwandung des Zuleitungsrohres bzw. des Ableitungsrohres (1) unter Verschliessen der in den Bereichen der weiteren Kanten (5') ausmündenden Kanäle (3') stumpf verklebt oder verschweisst sind.

## Claims

1. Solar collector made of plastics material, in which there are an inlet pipe (1), and an outlet pipe extending parallel thereto for the heat storing liquid and between these pipes (1) a plate (2), provided with ducts (3) extending transversely to the axial direction of the said pipes (1) and opening into the interior thereof, is secured by welding or bonding to an area of the inlet or outlet pipe (4) extending in the axial direction, the edges (5) of the plate which countains the openings of the ducts (3), for example, being inserted in the longitudinal slots (7) in the pipes (1) characterised in that the plate (2), measured in the axial direction of the pipes (1), is longer than the longitudinal slot (7) or the row of perforations (4) and the areas (2') of the plate which extend beyond the longitudinal slot (7) or the row of perforations (4) at either end are bonded or welded to the outer wall of the inlet pipe or outlet pipes (1) with a butt joint and block off the ducts (3') which open in these areas (2').

2. Solar collector according to claim 1, characterised in that the end areas of the edges (5) of the plate (2) which contain the openings of the ducts (3) are cut away to form additional edges (5') parallel to the said edges (5'), the thus formed additional edges (5') of the plate (2) being bonded or welded to the outer wall of the inlet pipe or outlet pipe (1) with a butt joint thereby to closs off the ducts (3') which open in areas occupied by the additional edges (5').

## Revendications

1. Collecteur solaire en matière plastique, dans lequel une plaque (2) est fixée par collage ou soudage entre un tuyau d'alimentation et un tuyau d'évacuation parallèle à ce dernier pour le liquide caloporteur, cette plaque étant disposée perpendiculairement à l'axe de ces tuyaux (1) et présentant des canaux (3) débouchant dans l'espace intérieur de ces derniers, à chaque zone du tuyau d'alimentation respectivement, du tuyau d'évacuation, présentant chaque fois une fente longitudinale (7) ou une série de trous (4) disposée selon l'axe, et est enfichée par exemple dans les fentes longitudinales (7) des tuyaux (1) par ses bords (5) comportant les embouchures des canaux (3), caractérisé en ce que la plaque (2), mesurée selon la direction axiale des tuyaux (1) est plus longue que la fente longitudinale (7) respectivement, la série de trous (4) est collée ou soudée par ses zones (2') dépassant de chaque côté la fente longitudinale (7) respectivement, la série de trous (4), avec la paroi extérieure du tuyau d'alimentation respective du tuyau d'évacuation (1) avec obturation des canaux (5') débouchant dans ces zones (5').

2. Collecteur solaire selon la revendication 1, caractérisé en ce que la plaque (2) est découpée dans les zones d'extrémité de ses bords (5) comportant les embouchures des canaux (3) en formant d'autres bords (5') parallèles à ces bords (5), ces autres bords ainsi formés (5') de la plaque (2) étant collés ou soudés bout à bout avec la paroi extérieure du tuyau d'alimentation respectivement du tuyau d'évacuation (1) avec obturation des canaux (3') débouchant dans les zones des autres bords (5').

## FIG.1

## FIG.2

## FIG.3